# EUROPEAN PATENT SPECIFICATION

(11) **EP 3 913 714 B1**
(45) Date of publication and mention of the grant of the patent: **25.10.2023**
(21) Application number: 21166448.7
(22) Date of filing: 31.03.2021
(51) Int. Cl.: H01M 10/04, H01M 10/0585, H01M 50/211, B23K 26/24

(54) **METHOD OF MANUFACTURING BATTERY MODULE AND BATTERY MODULE MANFUACTURED THEREBY**
VERFAHREN ZUR HERSTELLUNG EINES BATTERIEMODULS UND DADURCH HERGESTELLTES BATTERIEMODUL
PROCÉDÉ DE FABRICATION D'UN MODULE DE BATTERIE ET MODULE DE BATTERIE AINSI FABRIQUÉ

(30) Priority: 09.04.2020 KR 20200043101
(43) Date of publication of application: 24.11.2021
(73) Proprietor: SK On Co., Ltd., Seoul 03161 (KR)
(72) Inventor: KIM, Wook Hyun, 34124 Daejeon (KR)
(74) Representative: Stolmár & Partner Patentanwälte PartG mbB

(56) References cited:
- EP-A1- 3 255 701
- KR-A- 20040 089 168
- KR-A- 20070 109 082

## Description

### TECHNICAL FIELD

The following disclosure relates to a method of manufacturing a battery module for preventing thermal damage and a battery module manufactured thereby, and in particular, to a manufacturing method of welding a battery module to solve a problem of damaging a battery cell accommodated inside due to heat that occurs during welding, and a battery module manufactured thereby.

### BACKGROUND

Recently, demand for ensuring safety of a battery module has increased in terms of the rapid spread of electric vehicles. A battery cell of a secondary battery is formed by wrapping an electrode assembly including a positive electrode and a negative electrode, a separator, and an electrolyte with an exterior material. The electrode assembly is classified as a jelly-roll type in which a separator is interposed between a sheet-shaped positive electrode and a negative electrode coated with an active material, which is then wound, a stack type in which a plurality of positive and negative electrodes are sequentially stacked with a separator interposed therebetween, and a stack-folding type in which the stack-folding type unit cells are wound with an elongated separation film. An exterior material wrapping such an electrode assembly is packaged by a container formed to have a shape of a circle or a rectangular parallelepiped by pressing a metal material or a pouch formed of a multilayer film obtained by extrusion-molding a polymer material. Battery cells of secondary batteries of unit entities have been used to supply power to small electric devices such as smartphones or the like, but with the development of technologies for secondary batteries, electric devices are used in various fields such as mid- to large-sized home appliances and electric vehicles. However, the battery cells of single entities cannot provide the amount of power required for devices such as the aforementioned electric vehicles. Therefore, secondary battery modules including a plurality of secondary battery cells are used.

Here, when a single battery cell is damaged during a manufacturing process of a battery module or when quality is abnormal, foreign matter may be introduced into the battery cell or a short circuit may occur between internal compositions and the single battery cell may cause a series of fires or explosions in an electric device equipped with a plurality of battery modules. Therefore, the battery cells should maintain uniform quality before and after being accommodated in the battery module.

However, a housing of a battery module includes a plurality of parts, and the housing constituting the exterior is coupled through welding. Here, welding heat that occurs due to welding may be transferred to a battery cell accommodated inside the battery module, causing damage to the exterior of the battery cell. In addition, although not checked in the process of manufacturing or inspecting a battery module, various problems such as external vibration or introduction of foreign matter may occur during the use of the battery module equipped in an electric device, and thus, a solution is needed.

### [Related art document]

### [Patent document]

(Patent document 1) Korean Patent Laid-Open Publication No. 10-2004-0089168
Patent document 2: EP 3255701

### SUMMARY

An embodiment of the present invention is directed to providing a welding method of ensuring safety of a battery module by preventing a problem of damaging a battery pouch cell accommodated in the battery module due to excessive welding heat that occurs due to welding during manufacturing of the battery module.

In one general aspect, a method of manufacturing a battery module by welding a battery module housing including a lower housing accommodating a battery stack cell formed by stacking a plurality of pouch cells with a protruding electrode tab, a lower housing accommodating the battery stack cell to face a lower portion and both side surfaces of the battery stack cell, a front cover and a rear cover coupled to the front and rear of the lower housing, and a cover plate disposed at an upper portion of the battery stack cell and coupled to both edges of the lower housing, includes: a stack cell inserting operation of inserting a battery stack cell into the lower housing; a module case assembling operation of assembling the front cover, the rear cover, and the cover plate to the stack cell-inserted lower housing; a first welding operation of welding, by a laser, a gap portion formed between any one of the cover plate, the front cover, and the rear cover and an assembly surface of the lower housing in the module case assembling operation; and a second welding operation of welding the gap portion by a laser different from the laser used in the first welding operation after the first welding operation.

In the second welding operation, the gap portion may be welded with a power lower than a laser power in the first welding operation.

The laser power in the second welding operation may be 0.25 times to 0.4 times the laser power in the first welding operation.

A size of a laser spot in the first welding operation may be smaller than a size of a laser spot in the second welding operation.

The welding in the first welding operation and the second welding operation may be wobble welding.

The wobble welding laser overlap rate in the first welding operation may be lower than a laser overlap rate in the second welding operation.

In another general aspect, a battery module manufactured by the method of manufacturing a battery module includes: a battery stack cell formed by stacking a plurality of pouch cells with a protruding electrode tab; a lower housing accommodating the battery stack cell to face a lower portion and both side surfaces of the battery stack cell; a front cover and a rear cover disposed to face the electrode tap of the pouch cell and coupled to the lower housing; and a cover plate disposed at an upper portion of the battery stack cell and coupled to both edges of the lower housing, wherein a gap portion is formed on an assembled surface between the lower housing and the cover plate, the front cover, and the rear cover, and a first welded portion formed by the first welding operation and a second welded portion formed by the second welding operation.

Other features and aspects will be apparent from the following detailed description, the drawings, and the claims.

### BRIEF DESCRIPTION OF THE DRAWINGS

FIG. 1 is an exploded perspective view of the battery module of the present invention.
FIG. 2 is a flowchart showing a method of manufacturing a battery module according to the present invention.
FIG. 3 is a perspective view showing a module case assembly process of the method of manufacturing a battery module according to the present invention.
FIG. 4 is a perspective view showing a battery module for which finished a second welding operation according to the method of manufacturing a battery module according to the present invention has been finished.
FIG. 5 is a cross-sectional view taken along line A-A' of FIG. 4.
FIG. 6 is an enlarged view of a portion indicated by the circle of FIG. 5.

### DETAILED DESCRIPTION OF EMBODIMENTS

Hereinafter, the technical idea of the present invention will be described in more detail using the accompanying drawings.

The accompanying drawings are only an example shown to more specifically describe the technical idea of the present invention, so the technical idea of the present invention is not limited to the form of the accompanying drawings.

When a component is referred to as being "coupled" or "connected" to another component, it should be understood that it is directly coupled or connected to the other component or other components may exist therebetween.

Unless otherwise defined, all terms used herein, including technical or scientific terms, have the same meaning as commonly understood by a person skilled in the art to which the present invention pertains.

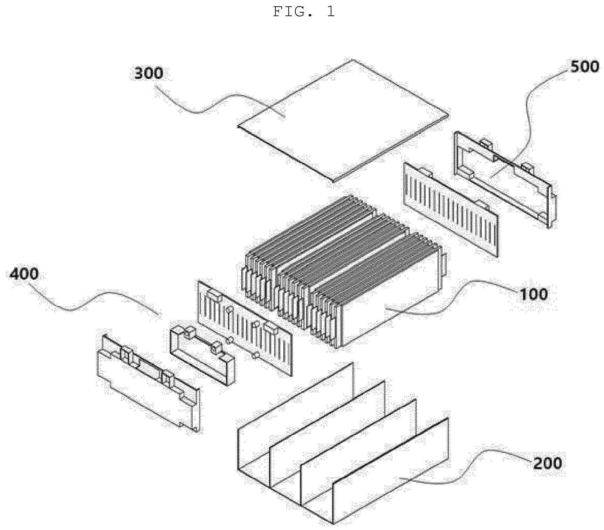

FIG. 1 is an exploded perspective view of a battery module of the present invention. Referring to FIG. 1, the battery module of the present invention includes a battery stack cell 100 formed by stacking a plurality of pouch cells with a protruding electrode tab, a lower housing 200 accommodating the battery stack cell 100 to face a lower portion and both side surfaces of the battery stack cell 100, a front cover 400 and a rear cover 500 disposed to face the electrode tab of the pouch cell and coupled to the lower housing 200, and a cover plate 300 disposed at an upper portion of the battery stack cell 100 and coupled to both edges of the lower housing 200.

The battery stack cell 100 is a single pouch cell formed by stacking a plurality of pouch-type secondary batteries in which three sides are sealed such that an electrode assembly including a positive electrode and a negative electrode protrude from both sides of the pouch for a battery. The battery stack cell 100 serves to discharge or charge electricity in the battery module.

The lower housing 200 has a predetermined space formed therein to accommodate the battery stack cell 100 and accommodates the battery stack cell 100 in a shape in which sides from which both side electrodes of the battery stack cell 100 protrude and a side opposing a flat side, among the three sealed sides that are open. The flat side among the three sealed sides of the battery stack cell 100 may be disposed to be in surface contact with the lower housing 200. Furthermore, a cooling plate may be interposed by an adhesive between the lower housing 200 and the flat side among the three sealed sides of the battery stack cell 100 and may be in contact with the lower housing 200. In an embodiment, the cooling plate may be coated with a separate heat transmission material.

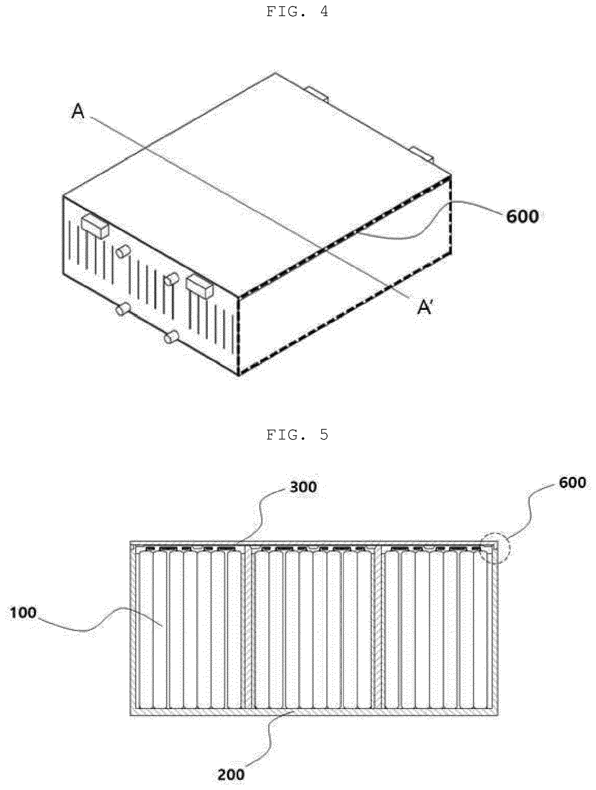

The cover plate 300 serves to cover an upper side of the battery stack cell 100 accommodated in the lower housing 200. Here, the cover plate 300 may be seated on an upper surface of the lower housing 200 and a shape of a portion of the cover plate 300 in contact with a side surface of the lower housing 200 may include a structure of blocking welding heat on an inner side of the lower housing 200. The corresponding structure will be dealt with in the description of FIG. 5.

The front cover 400 and the rear cover 500 are seated to block the front and rear of the lower housing 200. Here, a sensing substrate including a bus bar connected to the plurality of battery stack cells 100 may be interposed between the lower housing 200 and the front cover 400 and the electrodes protruding to both sides from the battery stack cell 100.

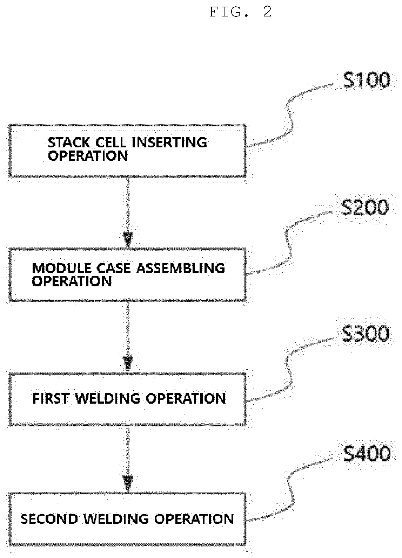

FIG. 2 is a flowchart showing a method of manufacturing a battery module according to the present invention. As shown, the method includes a stack cell inserting operation (S100) of inserting a battery stack cell 100 into the lower housing 200; a module case assembling operation (S200) of assembling the front cover 400, the rear cover 500, and the cover plate 300 to the stack cell-inserted lower housing 200; a first welding operation (S300) of welding, by a laser, a gap portion 600 formed at an assembly surface of the cover plate 300, the front cover 400, and the rear cover 500 with the lower housing 200; and a second welding operation (S400) of welding the gap portion 600 by a laser different from the laser used in the first welding operation after the first welding operation.

First, in the stack cell insertion operation (S100), the battery stack cell 100 is inserted into the lower housing 200 having a lower surface and both side surfaces provided on both sides of the lower surface and having a predetermined height. Here, a distance between edges of both side surfaces of the lower housing 200 is smaller than a length of the lower surface so that pressure may be applied to an outer surface of the battery cell when the battery stack cell 100 is inserted.

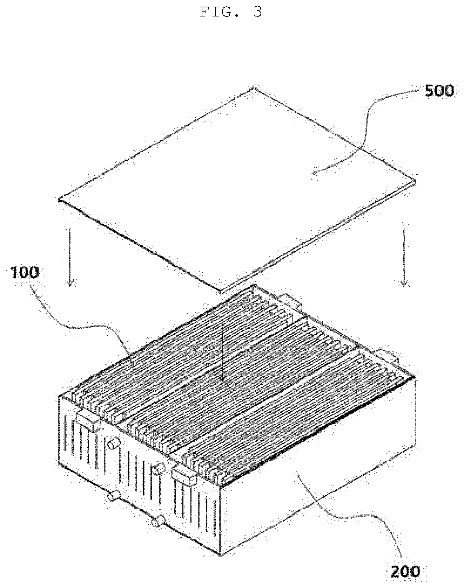

Next, in the module case assembly operation (S200), the front cover 400, the rear cover 500, and the cover plate 300 are assembled to the lower housing 200 into which the stack cell has been inserted. Components of the battery module may basically include the battery stack cell 100, the lower housing 200, the cover plate 300, the front cover 400, and the rear cover 500, and may further include an embodiment of the battery module described hereinafter. FIG. 3 is a perspective view showing a module case assembly process of a method of manufacturing a battery module according to the present invention. Here, the assembly is a prior procedure to prepare the gap portion 600 formed as the cover plate 300, the front cover 400, and the rear cover 600 that are seated in the lower housing 200 in which the battery stack cell 100 is accommodated, for the first welding operation 5300 and the second welding operation 5400 performed to seal the battery module and fix components.

In the first welding operation (S300), the gap portion 600 is first welded. The first welding operation may be performed to secure a penetration depth in the gap portion 600 through sufficient strength and performed with power of 70% to 80% of welding power of the related art to prevent damage to the battery stack cell 100 accommodated in the lower housing 200 due to welding heat. Through the first welding operation (S300), a first welded portion may be formed at the gap portion 600.

In the second welding operation (S400), the gap portion 600, which has secured the penetration depth in the first welding operation (S300), is further welded. The second welding operation (S400) is performed to weld the gap portion 600 with power of 20% to 300 of welding power of the related art to secure a welding appearance. Here, the laser power of the second welding operation (S400) may be 0.25 times to 0.4 times a laser power of the first welding operation (S300), and a second welded portion may be formed at the gap portion 600 through the second welding operation (S400).

That is, in the second welding operation (S400), a surface of the first welded portion, roughened after the first welding operation (S300) with a smaller power than the first welding operation (S300), is post-treated to improve formation of pores or cracks on the surface or a blow out in which an adhesive is heated and destroyed, or the like, by which welding quality of the second welded portion formed by the second welding may be improved and damage to the battery stack cell 100 accommodated in the lower housing 200 due to welding heat may be prevented.

As an example, there may be an embodiment of adjusting a laser spot size in order to control heat generated during welding performed in the first welding operation (S300) and the second welding operation (S400). At this time, in order to further reduce thermal damage to the internal battery stack cell due to residual welding heat after the first welding operation (S300), a power determining operation of determining a magnitude of power and a spot size adjusting operation of adjusting a spot size may be additionally provided.

In the power determination operation, whether a laser power set in the second welding operation (S400) is lower than a laser power performed in the first welding operation (S300) may be determined, and this may be determined by a control system of laser welding equipment.

In the spot adjusting operation, a spot size of a laser output from the laser module is adjusted. In the first welding operation (S300), it is preferred to reduce the spot size to secure a penetration depth and increase energy density, but when the spot size is small, a welded surface is not uniform, and thus, the welded surface may become uniform by adjusting the spot size to be larger in the second welding operation (S400).

As another embodiment, the welding performed in the first welding operation (S300) and the second welding operation (S400) may be wobble welding. In order to prevent thermal damage to the battery stack cell 100 due to residual welding heat after performing the first welding operation (S300), a power determining operation and an overlap rate adjusting operation may be additionally performed to perform the second welding operation (S400). A description of a power control operation of the first welding operation (S300) and the second welding operation (S400) described above will be omitted.

In the operation of adjusting an overlap rate, an overlap rate in which a laser irradiated to the gap portion 600 overlaps the surface during wobble welding is adjusted. In wobble welding, a laser module for welding the gap portion 600 performs welding on the gap portion, while vibrating at a preset period along the gap portion 600 and performs welding of the gap portion 600. Generally, as the overlap rate is higher, a heat input is higher but a defect rate of the welded surface is higher, and as the overlap rate is lower, a heat input is lower but the quality of the welded surface is good, and thus, both welding strength and surface quality may be satisfied by adjusting the overlap rate by stages. Here, in detail, according to the present invention, a laser overlap rate of wobble welding in the first welding operation may be set to be lower than a laser overlap rate of the second welding operation.

FIG. 4 is a perspective view showing a battery module that has finished the second welding operation (S400) according to a method of manufacturing a battery module according to the present invention, in which the gap portion 600 formed by the lower housing 200 and the cover plate 300, the front cover 400, and the rear cover 500 is fixed by welding. In FIG. 4, the gap portion 600 of only one side of the battery module is illustrated, but in addition, the gap portion 600 may be formed in a portion in which the cover plate 300, the front cover 400, or the rear cover 500 of the lower housing of a module case is seated, and a battery module housing is completed through welding.

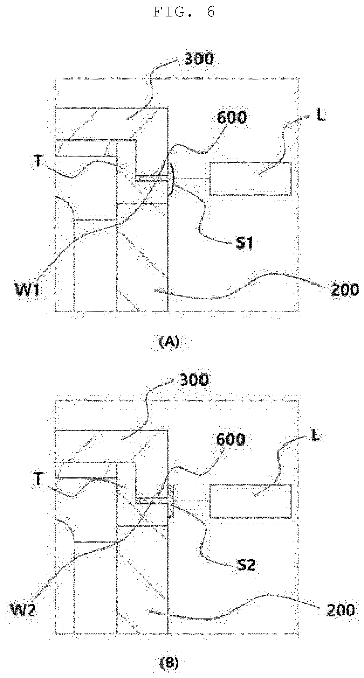

FIG. 5 is a cross-sectional view taken along line A-A' of FIG. 4, and FIG. 6 is an enlarged view of a circular portion of FIG. 5. FIG. 6A schematically shows the first welding operation (S300), in which, welding is performed to allow a molten metal W1 to secure an appropriate penetration depth and welding strength in the gap portion 600 so that the battery stack cell 100 accommodated inside is not damaged by welding heat, and preferably, welding is performed with power of 700 or more and 80% or less of welding power of the related art. If the welding power is insufficient, the molten metal melted in the gap portion 600 is not sufficiently melted and hardened to result in an uneven welded surface and non-uniform welding appearance S1. In the present invention, after the first welding operation (S300), the second welding operation (S400) may be performed to weld the non-uniform welding appearance S1 of the molten metal W2 formed in the gap portion 600 one more with power of 20% or more and 300 or less of welding power of the related art, thereby forming a more uniform welding appearance S1.

Additionally, as shown in FIGS. 6A and 6B, the battery module of the present invention may include a separate heat shielding member T provided on an inner side to which the lower housing 200 and the cover plate 300, the front cover 400, the rear cover 500, etc. are connected. The heat shielding member T may be formed to protrude from the outer end of the lower housing 200 and disposed to be in surface contact with the inner side of the cover plate 300, the front cover 400, and the rear cover 500, etc. When the lower housing 200 and the cover plate 300, the font cover 400, and the rear cover 400 are assembled, the heat shielding member T may serve to prevent the gap portion 600 from communicating with the inside of the module in which the battery stack cell 100 is located and shield heat that occurs during the welding operation, thereby preventing thermal damage to the battery stack cell 100.

Through the above solution, the method of manufacturing a battery module of the present invention may solve the problem of damaging the accommodated battery cell as heat is transferred to the inside of the battery module due to welding heat that occurs during welding.

In addition, in a case in which a plurality of battery modules are used in electric vehicles and mid- to large-sized electric devices, safety is secured by preventing a chain effect of damaging all of the electric vehicles and mid- to large-sized electric devices due to fire and explosion by a single battery cell.

The invention is defined by the appended claims.

### [Detailed Description of Main Elements]

100: battery stack cell
200: lower housing
300: cover plate
400: front cover
500: rear cover
600: gap portion
L: laser module
S1: non-uniform welding surface
S2: uniform welding surface
T: heat shielding protrusion
W1, W2: molten metal

## Claims

1. A method of manufacturing a battery module by welding a battery module housing including a lower housing accommodating a battery stack cell formed by stacking a plurality of pouch cells with a protruding electrode tab, the lower housing accommodating the battery stack cell to face a lower portion and both side surfaces of the battery stack cell, a front cover and a rear cover coupled to the front and rear of the lower housing, and a cover plate disposed at an upper portion of the battery stack cell and coupled to both edges of the lower housing, the method comprising:
a stack cell inserting operation of inserting a battery stack cell into the lower housing;
a module case assembling operation of assembling the front cover, the rear cover, and the cover plate to the stack cell-inserted lower housing;
a first welding operation of welding, by a laser, a gap portion formed between any one of the cover plate, the front cover, and the rear cover and an assembly surface of the lower housing in the module case assembling operation; and
a second welding operation of welding the gap portion by a laser different from the laser used in the first welding operation after the first welding operation.

2. The method of claim 1, wherein, in the second welding operation, the gap portion is welded with a power lower than a laser power in the first welding operation.

3. The method of claim 2, wherein the laser power in the second welding operation is 0.25 times to 0.4 times the laser power in the first welding operation.

4. The method of claim 2, wherein a size of a laser spot in the first welding operation is smaller than a size of a laser spot in the second welding operation.

5. The method of claim 2, wherein the welding in the first welding operation and the second welding operation is wobble welding.

6. The method of claim 5, wherein the wobble welding laser overlap rate in the first welding operation is lower than a laser overlap rate in the second welding operation.

7. A battery module manufactured by the method of manufacturing a battery module of claim 1, the battery module comprising:
a battery stack cell formed by stacking a plurality of pouch cells with a protruding electrode tab;
a lower housing accommodating the battery stack cell to face a lower portion and both side surfaces of the battery stack cell;
a front cover and a rear cover disposed to face the electrode tap of the pouch cell and coupled to the lower housing; and
a cover plate disposed at an upper portion of the battery stack cell and coupled to both edges of the lower housing,
wherein a gap portion is formed on an assembled surface between the lower housing and the cover plate, the front cover, and the rear cover, and a first welded portion formed by the first welding operation and a second welded portion formed by the second welding operation.

## Patentansprüche

1. Verfahren zur Herstellung eines Batteriemoduls durch Schweißen eines Batteriemodulgehäuses enthaltend ein unteres Gehäuse, das eine Batteriestapelzelle aufnimmt, die durch Stapeln einer Vielzahl von Zellen vom Beuteltyp mit einer vorstehenden Elektrodenlasche gebildet wird, wobei das untere Gehäuse die Batteriestapelzelle so aufnimmt, dass es einem unteren Abschnitt und beiden Seitenflächen der Batteriestapelzelle zugewandt ist, eine vordere Abdeckung und eine hintere Abdeckung, die mit der Vorderseite und der Rückseite des unteren Gehäuses verbunden sind, und eine Abdeckplatte, die an einem oberen Abschnitt der Batteriestapelzelle angeordnet und mit beiden Rändern des unteren Gehäuses verbunden ist, wobei das Verfahren umfasst:
einen Stapelzellen-Einsetzvorgang des Einsetzens einer Batteriestapelzelle in das untere Gehäuse;
einen Modulgehäuse-Montagevorgang, bei dem die vordere Abdeckung, die hintere Abdeckung und die Abdeckplatte mit dem unteren Gehäuse, in das die Stapelzelle eingesetzt ist, zusammengefügt werden;
einen ersten Schweißvorgang des Verschweißens eines Spaltabschnitts, der zwischen irgendeinem aus der Abdeckplatte, der vorderen Abdeckung und der hinteren Abdeckung und einer Montagefläche des unteren Gehäuses in dem Modulgehäuse-Montagevorgang gebildet wird, mittels eines Lasers; und
einen zweiten Schweißvorgang des Verschweißens des Spaltabschnitts mittels eines Lasers, der sich von dem im ersten Schweißvorgang verwendeten Laser unterscheidet, nach dem ersten Schweißvorgang.

2. Verfahren nach Anspruch 1, wobei in dem zweiten Schweißvorgang der Spaltabschnitt mit einer Leistung verschweißt wird, die geringer ist als eine Laserleistung in dem ersten Schweißvorgang.

3. Verfahren nach Anspruch 2, wobei die Laserleistung in dem zweiten Schweißvorgang das 0,25- bis 0,4-fache der Laserleistung in dem ersten Schweißvorgang beträgt.

4. Verfahren nach Anspruch 2, wobei die Größe eines Laserpunktes in dem ersten Schweißvorgang kleiner ist als die Größe eines Laserpunktes in dem zweiten Schweißvorgang.

5. Verfahren nach Anspruch 2, wobei das Schweißen in dem ersten Schweißvorgang und in dem zweiten Schweißvorgang Taumelschweißen ist.

6. Verfahren nach Anspruch 5, wobei die Laserüberlappungsrate bei dem Taumelschweißen in dem ersten Schweißvorgang geringer ist als eine Laserüberlappungsrate in dem zweiten Schweißvorgang.

7. Batteriemodul, hergestellt nach dem Verfahren zur Herstellung eines Batteriemoduls nach Anspruch 1, wobei das Batteriemodul umfasst:
eine Batteriestapelzelle, die durch Stapeln einer Vielzahl von Zellen vom Beuteltyp mit einer vorstehenden Elektrodenlasche gebildet wird;
ein unteres Gehäuse, das die Batteriestapelzelle so aufnimmt, dass es einem unteren Abschnitt und beiden Seitenflächen der Batteriestapelzelle zugewandt ist;
eine vordere Abdeckung und eine hintere Abdeckung, die so angeordnet sind, dass sie der Elektrodenlasche der Zelle vom Beuteltyp zugewandt sind und mit dem unteren Gehäuse verbunden sind; und
eine Abdeckplatte, die an einem oberen Abschnitt der Batteriestapelzelle angeordnet und mit beiden Rändern des unteren Gehäuses verbunden ist,
wobei ein Spaltabschnitt auf einer Montagefläche zwischen dem unteren Gehäuse und der Abdeckplatte, der vorderen Abdeckung und der hinteren Abdeckung gebildet wird und ein erster Schweißabschnitt durch den ersten Schweißvorgang und ein zweiter Schweißabschnitt durch den zweiten Schweißvorgang gebildet wird.

## Revendications

1. Procédé de fabrication d'un module de batterie par soudage d'un boîtier de module de batterie comprenant un boîtier inférieur accueillant une cellule de pile de batterie formée par l'empilement d'une pluralité de cellules de poche avec une languette d'électrode saillante, le boîtier inférieur accueillant la cellule de pile de batterie pour faire face à une partie inférieure et aux deux surfaces latérales de la cellule de pile de batterie, un couvercle avant et un couvercle arrière couplés à l'avant et à l'arrière du boîtier inférieur, et une plaque de couverture disposée à une partie supérieure de la cellule de pile de batterie et couplée aux deux bords du boîtier inférieur, le procédé comprenant :
une opération d'insertion d'une cellule de pile consistant à insérer une cellule de pile de batterie dans le boîtier inférieur ;
une opération d'assemblage du boîtier de module consistant à assembler le couvercle avant, le couvercle arrière et la plaque de couverture au boîtier inférieur inséré dans la cellule de pile ;
une première opération de soudage consistant à souder, au moyen d'un laser, une partie d'espace formée entre l'une quelconque des plaques de couverture, le couvercle avant et le couvercle arrière et une surface d'assemblage du boîtier inférieur au cours de l'opération d'assemblage du boîtier de module ; et
une seconde opération de soudage de la partie d'espace au moyen d'un laser différent de celui utilisé dans la première opération de soudage, après la première opération de soudage.

2. Procédé selon la revendication 1, dans lequel, lors de la seconde opération de soudage, la partie d'espace est soudée avec une puissance inférieure à la puissance de laser lors de la première opération de soudage.

3. Procédé selon la revendication 2, dans lequel la puissance de laser lors de la seconde opération de soudage est de 0,25 fois à 0,4 fois la puissance de laser lors de la première opération de soudage.

4. Procédé selon la revendication 2, dans lequel la taille d'un point laser dans la première opération de soudage est plus petite que la taille d'un point laser dans la seconde opération de soudage.

5. Procédé selon la revendication 2, dans lequel le soudage dans la première opération de soudage et la seconde opération de soudage est un soudage par oscillation.

6. Procédé selon la revendication 5, dans lequel le taux de chevauchement du laser de soudage par oscillation lors de la première opération de soudage est inférieur au taux de chevauchement du laser lors de la seconde opération de soudage.

7. Module de batterie fabriqué selon le procédé de fabrication d'un module de batterie selon la revendication 1, le module de batterie comprenant :
une cellule de pile formée par l'empilement d'une pluralité de cellules de poche avec une languette d'électrode saillante ;
un boîtier inférieur accueillant la cellule de pile pour faire face à une partie inférieure et aux deux surfaces latérales de la cellule de pile ;
un couvercle avant et un couvercle arrière disposés de manière à faire face à l'électrode de la cellule de poche et couplés au boîtier inférieur ; et
une plaque de couverture disposée sur une partie supérieure de la cellule de pile et couplée aux deux bords du boîtier inférieur,
dans lequel une partie d'espace est formée sur une surface assemblée entre le boîtier inférieur et la plaque de couverture, le couvercle avant et le couvercle arrière, et une première partie soudée formée par la première opération de soudage et une seconde partie soudée formée par la seconde opération de soudage.
